# EUROPÄISCHE PATENTSCHRIFT

(11) **EP 1 448 914 B1**
(45) Veröffentlichungstag und Bekanntmachung des Hinweises auf die Patenterteilung: **23.04.2008**
(21) Anmeldenummer: 02764869.0
(22) Anmeldetag: 02.09.2002
(51) Int. Cl.: F16H 7/08

(54) **SPANNVORRICHTUNG FÜR EIN ENDLOSTREIBELEMENT**
TENSIONING DEVICE FOR AN ENDLESS DRIVE ELEMENT
DISPOSITIF DE SERRAGE DESTINE A UN ELEMENT D'ENTRAINEMENT SANS FIN

(30) Priorität: 20.11.2001 DE 20118895 U
(43) Veröffentlichungstag der Anmeldung: 25.08.2004
(73) Patentinhaber: JOH. WINKLHOFER & SÖHNE GmbH & Co KG, D-81369 München (DE)
(72) Erfinder: PREIS, Artur, 82110 Germering (DE); BACHMAIR, Peter, 81371 München (DE)
(74) Vertreter: Grünecker, Kinkeldey, Stockmair & Schwanhäusser Anwaltssozietät
(86) Internationale Anmeldenummer: PCT/EP2002/009783
(87) Internationale Veröffentlichungsnummer: WO 2003/044391

(56) Entgegenhaltungen:
- EP-A- 0 846 891
- DE-A- 4 340 865
- DE-A- 19 702 992
- DE-A- 19 923 905
- US-A- 5 253 577
- FITTS BRUCE B ET AL: "Advanced moldable phenolic composites" THERMOSETS '90;ROSEMONT, IL, USA MAR 20-22 1990, 1990, Seiten 143-154, XP008010329 Thermosets 90 1990 Publ by Soc of Plastics Engineers, Brookfield, CT, USA
- "main applications in the automotive industry" VYNCOLIT-AUTOMOTIVE, [Online] XP002219860 Gefunden im Internet: <URL:http://www.vyncolit.com/EN/3Applicati ons/31Automotive/automotive.htm> [gefunden am 2002-11-07]

## Beschreibung

Die vorliegende Erfindung betrifft eine Spannvorrichtung für ein Endlostreibelement, insbesondere Steuerkette eines Verbrennungsmotors, mit einem Gehäuse und einem im Gehäuse bewegbar angeordneten Spannkolben.

Insbesondere bei Steuerkettentrieben bei einem Verbrennungsmotors ist es üblich, zumindest einseitig eine Spannschiene gegen die Kette zu drücken. Die Spannkraft wird über einen Kettenspanner aufgebracht, der auf einen dafür geeignet ausgestalteten Bereich der Spannschiene aufdrückt. Ein Teil solcher Kettenspanner ist an den Motorölhydraulikkreislauf angeschlossen, so dass im Betrieb die Spannkraft sowie die hydraulische Dämpfung durch geeignete Ausgestaltung des Kettenspanners aufgrund der hydraulischen Druckverhältnisse im Kettenspanner erzielt wird. Ein Spannkolben, der in einem Gehäuse geführt ist, wird an seiner Rückseite mit einer Hydraulikkraft beaufschlagt. Das bedeutet, dass je höher die Drehzahl des Motors ist, desto höher ist auch die Spannkraft. Aber auch hier gibt es geeignete Konstruktionen, die dies in gewünschter Weise steuern oder die Kraft nach oben hin begrenzen. Des weiteren ist in den meisten Fällen eine Feder vorgesehen, die zumindest zum Zeitpunkt eines noch nicht ausreichend aufgebauten Hydraulikdrucks eine gewisse Mindestvorspannung bereit hält. Das Gehäuse ist aufgrund der vorherrschenden Druckkräfte bevorzugt aus einem Aluminiumdruckguss hergestellt, während der Kolben aus Stahl besteht. Es gibt jedoch auch Bauformen, denen eine Stahlführungshülse für den Spannkolben von einem Kunststoffgehäuse aus Thermoplast umspritzt wird. Viele der bekannten Spannvorrichtungsbauformen haben sich im Einsatz sehr gut bewährt. Jedoch bestehen weiterhin Bestrebungen bei Beibehaltung der gewünschten Haltbarkeit eine Kostenreduktion herbeizuführen.

Aus der DE 19923905 ist eine Spanneirichtung mit den Merkmalen des Oberbegriffes des Anspruches 1 bekannt.

Diese Aufgabe wird erfindungsgemäß durch den kennzeichnenden Teil des Anspruches 1 gelöst. Versuche haben gezeigt, dass sich Duroplastwerkstoffe für solche Einsatzzwecke sehr gut eignen und dass es generell nicht wie bei Thermoplasten notwendig ist, eine Verstärkungshülse einzusetzen. Auf den ersten Blick erscheint es verwunderlich, warum Duroplastwerkstoffe bislang für derartige Einsatzzwecke nicht herangezogen wurden. Voraussichtlich war die Fachwelt jedoch der Meinung, dass zumindest die Druckkammer, in der der Spannkolben geführt ist, aus einem Metallwerkstoff sein sollte, um eine ausreichende Stabilität bereitzustellen. Neben den gewünschten Festigkeitseigenschaften sorgt der Duroplastwerkstoff auch für eine Reduktion des Gewichts und der Herstellkosten. Bevorzugt ist die den Spannkolben führende Bohrungswandung durch einen Duroplastwerkstoff gebildet.

Günstigerweise kann das Gehäuse vollständig aus dem Duroplastwerkstoff bestehen. Demnach werden weitere Elemente, wie z.B. Befestigungsösen etc. ebenfalls aus einem Duroplastwerkstoff geformt.

Bei einer Ausführungsform sind die Oberflächen des Gehäuses nachbearbeitungsfrei nur durch einen Duroplastformvorgang ausgestaltet. Das Gehäuse wird durch diese Vorgabe fertig aus der Form entnommen und es ist kein weiterer Bearbeitungsschritt zur Formgebung erforderlich.

Vorteilhafterweise kann der Spannkolben aus einem Duroplastwerkstoff hergestellt seinen. Auch dieser kann durch die geeignete Wahl des Duroplastwerkstoffes optimal an sein Einsatzzweck angepasst werden. Auch eignen sich Duroplastwerkstoffe sehr gut, um einander entlang zu gleiten, wie hier das Gehäuse und der Spannkolben. Es soll an dieser Stelle jedoch verstanden sein, dass es prinzipiell möglich ist, eine Spannvorrichtung mit Gehäuse und einem Spannkolben aus einem Duroplastwerkstoff bereitzustellen, bei dem das Gehäuse auch aus einem anderen Werkstoff besteht.
Auch die Oberflächen des Spannkolbens können nachbearbeitungsfrei durch einen Duroplastformvorgang ausgestaltet sein. Durch den Duroplastformvorgang lassen sich insbesondere die für die notwendige Gleitbewegung sehr gute Oberflächen herstellen.

Als besonderer Vorteil ist die Vorgabe gemäß einer Ausführungsform anzusehen, bei der das Gehäuse und der Spannkolben im wesentlichen den gleichen Wärmeausdehnungskoeffizienten aufweisen. Hierdurch sind keine zusätzlichen Maßnahmen erforderlich, die für einen geeigneten Ausgleich sorgen. Die Vergrößerung oder Schrumpfung des Gehäuses und des Spannkolbens laufen dann gleichmäßig zueinander ab.

Bevorzugt kann der mindestens eine Duroplastwerkstoff ein Kunststoff auf Phenolharzbasis mit mindestens einem Füllstoff sein. Duroplastwerkstoffe auf Phenolharzbasis sind für den Haupteinsatzzweck im Steuerkettentrieb eines Verbrennungsmotors sehr gut geeignet und halten den dort vorgegebenen Belastungen hinsichtlich Schmierstoff- und Wärmeeinflüssen stand.

Insbesondere kann mindestens ein Duroplastwerkstoff eine hohe Wärmebeständigkeit bis mindestens 140°C, bevorzugt 160°C, aufweisen. Hiermit ist gemeint, dass der Duroplast einschließlich seiner eventuell vorhandenen Füllstoffe auch bei höheren Temperaturen (z.B. bei 140°C) seine hohen mechanischen Eigenschaften (z.B. Druckfestigkeit, Biegefestigkeit) beibehält. Diese mechanischen Eigenschaften können in Größenordnungen von Aluminiumwerkstoffen liegen. Thermoplaste fangen bei solchen Temperaturen das Fließen an, so dass entsprechende Gegenmaßnahmen getroffen werden müssen. Diese entfallen bei der Verwendung von Duroplastwerkstoffen. Generell sind die hier vorgeschlagenen Duroplastwerkstoffe mechanisch hoch belastbar, und zwar weit oberhalb den Belastungsweten, die durch Thermoplastwerkstoffe möglich sind.

Des Weiteren besteht die Möglichkeit, dass der mindestens eine Füllstoff aus der folgenden Gruppe ausgewählt ist:

Glasfasern, Glaskugeln, Mineralstoffe, Graphit, PTFE (Teflon) und MoS₂.

Auch Kombinationen dieser Füllstoffe sind in vorgegebenen Mischungsverhältnissen denkbar. Z.B. kann der Duroplastwerkstoff so gewählt werden, dass sich eine Reibungsreduktion oder eine höhere Festigkeit ergibt. Dies kann auch nur bereichsweise an den Bauteilen durch bewusste Beeinflussung des Materials an der jeweiligen Stelle geschehen.

Es besteht auch die Möglichkeit, dass das Gehäuse und der Spannkolben aus dem gleichen Werkstoff bestehen.

Aus Duroplastwerkstoff kann ein Werkstoff aus der folgenden Gruppe ausgewählt werden:
X 620
X 655
X 659
X 680
X 681
X 682
X 689
X 6952 (Hersteller: Fa. Vyncolit)

Die von dieser Firma unter der angegebenen Produktbezeichnung vertriebenen Duroplastwerkstoffe eignen sich hervorragend für Spannvorrichtungen, insbesondere Kettenspanner, die bei einem Steuerkettentrieb eines Verbrennungsmotors eingesetzt werden.

Im folgenden wird anhand einer Zeichnung ein Ausführungsbeispiel der vorliegenden Erfindung näher erläutert.

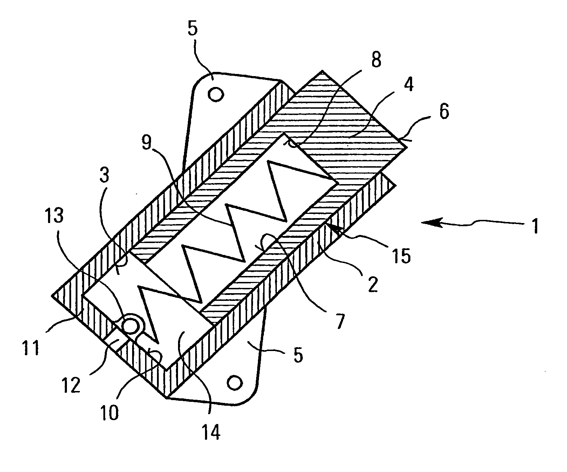

Der in der Figur dargestellte Kettenspanner 1 umfasst ein Gehäuse 2, mit einer Aufnahmebohrung 3 für einen darin verschiebbar geführten Spannkolben 4. Sowohl der Spannkolben 4 als auch die Aufnahmebohrung 3 sind zylinderförmig ausgestaltet. An dem Gehäuse 2 sind Befestigungsaufnahmen 5 vorgesehen, mit denen der Kettenspanner 1 am Motorgehäuse anschraubbar ist. Mit seiner Antriebfläche 6 drückt der Kettenspanner 1 gegen eine nicht näher dargestellte Spannschiene, die wiederum gegen eine Steuerkette eines Verbrennungsmotors gedrückt wird. Auf der Rückseite des Spannkolbens 4 befindet sich eine nicht durchgehende Zylinderbohrung 7, an deren Grundfläche 8 sich eine Schraubendruckfeder 9 abstützt. Diese Schraubendruckfeder 9 stützt sich an ihrem anderen Ende an dem Grund 10 der Aufnahmebohrung 3 ab. In dem Boden 11 des Gehäuses 2 ist eine Einlassbohrung 12 eingearbeitet, die über ein Rückschlagventil 13 mit der Druckkammer 14 in Verbindung steht.

Bei dem vorliegenden Ausführungsbeispiel sind sowohl der Spannkolben 4 als auch das Gehäuse 2 jeweils aus einem Duroplastwerkstoff hergestellt. Im vorliegenden Fall werden unterschiedliche Duroplastwerkstoffe eingesetzt. Der Spannkolben besteht aus einem X 659 und das Gehäuse aus einem X 689. Beide Duroplastwerkstoffe sind unter dieser Produktbezeichnung von der Firma Vyncolit (Gent, Belgien) beziehbar.

Es besteht aber durchaus die Möglichkeit, beide Elemente aus dem gleichen Duroplastwerkstoff herzustellen. Auch die Verwendung von Werkstoffen mit dem gleichen Wärmeausdehnungskoeffizient kann erfolgen.

Beim Duroplastformvorgang wird darauf geachtet, dass die Oberflächen des Gehäuses 2 und des Spannkolbens 4 nach diesem Formvorgang fertiggestellt und nicht nachbearbeitet werden müssen. Insbesondere ein spanendes Nachbearbeiten soll nicht mehr erfolgen. Prinzipiell besteht auch die Möglichkeit, eines dieser beiden Elemente, entweder das Gehäuse 2 oder den Spannkolben 4 auch aus einem anderen Werkstoff, z.B. einem Stahlwerkstoff herzustellen.

Im folgenden wird die Wirkungsweise des Kettenspanners 1 kurz erläutert.

Die Einlassbohrung 12 ist an den Motorölkreislauf des Verbrennungsmotors angeschlossen. Bei Starten des Motors fließt Öl über die Einlassbohrung 12 und das in dieser Richtung öffnende Rückschlagventil 13 in die Druckkammer 14 ein. Das an der Rückseite des Spannkolbens 4 wirkende Öl, drückt den Spannkolben 4 in seine Spannposition. Anfänglich erfolgt dies durch die Druckfeder 9. Im Betrieb ist jedoch der Hydraulikdruck so groß, dass die Federkraft kaum eine Rolle spielt. Eine Dämpfung wird dadurch erzielt, dass das Rückschlagventil 13 schließt, sobald der Druck in der Druckkammer 14 größer wird, als der Druck im Motorölkreislauf. Ein Abbau des Druckes erfolgt über den Leckagespalt 15, der aufgrund der (geringen) Spielführung zwischen dem Spannkolben 4 und dem Gehäuse 2 noch vorhanden ist.

Die gewählten Duroplastwerkstoffe sorgen für eine leichtbauende Variante, die den hier vorherrschenden Belastungen bei einem Steuerkettentrieb gerecht wird.

## Patentansprüche

1. Spannvorrichtung (1) für ein Endlostreibelement, insbesondere Steuerkette eines Verbrennungsmotors, mit einem Gehäuse (2) und einem im Gehäuse (2) bewegbar angeordneten Spannkolben (1), **dadurch gekennzeichnet, dass** das Gehäuse (2) zumindest bereichsweise aus mindestens einem Duroplastwerkstoff hergestellt ist und die Oberflächen der Aufnahmebohrung (3) des Gehäuses (2) nachbearbeitungsfrei nur durch einen Duroplastformvorgang ausgestaltet sind.

2. Spannvorrichtung (1) nach Anspruch 1, **dadurch gekennzeichnet, dass** das Gehäuse (2) vollständig aus Duroplastwerkstoff besteht.

3. Spannvorrichtung (1) nach einem der Ansprüche 1 bis 2, **dadurch gekennzeichnet, dass** der Spannkolben (1) aus einem Duroplastwerkstoff herstellt ist und zumindest die für die Gleitbewegung notwendigen Oberflächen des Spannkolbens (1) nachbearbeitungsfrei durch einen Duroplastformvorgang ausgestaltet sind.

4. Spannvorrichtung (1) nach Anspruch 3, **dadurch gekennzeichnet, dass** der Spannkolben (1) vollständig aus dem Duroplastwerkstoff besteht.

5. Spannvorrichtung (1) nach einem der Ansprüche 1 bis 4, **dadurch gekennzeichnet, dass** das Gehäuse (2) und der Spannkolben (1) im Wesentlichen den gleichen Wärmeausdehnungskoeffizienten aufweisen.

6. Spannvomchtung (1) nach Anspruch 5, **dadurch gekennzeichnet, dass** das Gehäuse (2) und der Spannkolben (4) aus dem gleichen Werkstoff bestehen.

7. Spannvomchtung (1) nach einem der Ansprüche 1 bis 6, **dadurch gekennzeichnet, dass** der mindestens eine Duroplastwerkstoff ein Kunststoff auf Phenolharzbasis mit mindestens einem Füllstoff ist.

8. Spannvorrichtung (1) nach Anspruch 7, **dadurch gekennzeichnet, dass** mindestens ein Duroplastwerkstoff eine hohe Wärmebeständigkeit bis mindestens 140°C, bevorzugt 160°C, aufweist.

9. Spannvorrichtung (1) nach Anspruch 7 oder 8, **dadurch gekennzeichnet, dass** der mindestens eine Füllstoff aus der folgenden Gruppe ausgewählt ist
Glasfasern
Glaskugeln
Mineralstoffe
Graphit
PTFE
MoS2.

## Claims

1. Tension device (1) for an endless drive element, in particular a control chain of an internal combustion engine, with a housing (2) and with a tension piston (1) arranged movably in the housing (2), **characterized in that** the housing (2) is produced, at least in regions, from at least one duroplastic material, and the surfaces of the reception bore (3) of the housing (2) are formed, free of remachining, by means of a duroplastic forming operation.

2. Tension device (1) according to Claim 1, **characterized in that** the housing (2) consists completely of duroplastic material.

3. Tension device (1) according to either one of Claims 1 and 2, **characterized in that** the tension piston (1) is produced from a duroplastic material, and at least the surfaces of the tension piston (1) which are necessary for the sliding movement are formed, free of remachining, by means of a duroplastic forming operation.

4. Tension device (1) according to Claim 3, **characterized in that** the tension piston (1) consists completely of the duroplastic material.

5. Tension device (1) according to one of Claims 1 to 4, **characterized in that** the housing (2) and the tension piston (1) have essentially the same coefficient of thermal expansion.

6. Tension device (1) according to Claim 5, **characterized in that** the housing (2) and the tension piston (4) consist of the same material.

7. Tension device (1) according to one of Claims 1 to 6, **characterized in that** the at least one duroplastic material is a plastic based on phenol resin with at least one filler.

8. Tension device (1) according to Claim 7, **characterized in that** at least one duroplastic material has a high thermal resistance of up to at least 140°C, preferably 160°C.

9. Tension device (1) according to Claim 7 or 8, **characterized in that** the at least one filler is selected from the following group:
glass fibres
glass balls
mineral substances
graphite
PTFE
MoS2.

## Revendications

1. Dispositif de serrage (1) pour un élément d'entraînement sans fin, notamment une chaîne de distribution d'un moteur à combustion interne, avec un carter (2) et un piston de serrage (1) disposé de manière mobile dans le carter (2), **caractérisé en ce que** le carter (2) est fabriqué au moins par zone en au moins un matériau thermodurcissable et les surfaces du perçage de positionnement (3) du carter (2) sont configurées sans usinage de rectification uniquement par un processus de formage thermodurcissable.

2. Dispositif de serrage (1) selon la revendication 1, **caractérisé en ce que** le carter (2) se compose entièrement de matériau thermodurcissable.

3. Dispositif de serrage (1) selon l'une quelconque des revendications 1 à 2, **caractérisé en ce que** le piston de serrage (1) est fabriqué en un matériau thermodurcissable et au moins les surfaces nécessaires au mouvement de glissement du piston de serrage (1) sont configurées sans usinage de rectification par un processus de formage thermodurcissable.

4. Dispositif de serrage (1) selon la revendication 3, **caractérisé en ce que** le piston de serrage (1) se compose entièrement de matériau thermodurcissable.

5. Dispositif de serrage (1) selon l'une quelconque des revendications 1 à 4, **caractérisé en ce que** le carter (2) et le piston de serrage (1) présentent essentiellement le même coefficient de dilatation thermique.

6. Dispositif de serrage (1) selon la revendication 5, **caractérisé en ce que** le carter (2) et le piston de serrage (4) se composent du même matériau.

7. Dispositif de serrage (1) selon l'une quelconque des revendications 1 à 6, **caractérisé en ce qu'**au moins un matériau thermodurcissable est une matière plastique à base de résine phénolique avec au moins une charge.

8. Dispositif de serrage (1) selon la revendication 7, **caractérisé en ce qu'**au moins un matériau thermodurcissable présente une résistance thermique maximale d'au moins 140°C, de préférence 160°C.

9. Dispositif de serrage (1) selon la revendication 7 ou 8, **caractérisé en ce qu'**au moins la charge est sélectionnée dans le groupe suivant comprenant :
des fibres de verre,
des billes de verre,
des matières minérales,
du graphite,
du PTFE,
du MoS2.
